# DEMANDE DE BREVET EUROPEEN

(11) **EP 2 208 625 A1**
(43) Date de publication de la demande: **21.07.2010**
(21) Numéro de dépôt: 09180446.8
(22) Date de dépôt: 22.12.2009
(51) Int. Cl.: B60H 1/00, B60H 1/24, B60H 1/34

(54) **Dispositif de contrôle de l'accés d'un flux d'air à un rangement d'un véhicule**

(30) Priorité: 15.01.2009 FR 0950208
(71) Demandeur: Peugeot Citroën Automobiles SA, 78140 Vélizy-Villacoublay (FR)
(72) Inventeur: Martinet, Gilles, 70400, MIGNAVILLERS (FR)
(74) Mandataire: Vigand, Régis Louis Michel

(57) **Abrégé**

Un dispositif (D) est dédié au contrôle de l'accès d'un flux d'air à un rangement (R) d'un véhicule, délimité au moins partiellement par une paroi (PA) comportant au moins une ouverture propre à permettre l'entrée de ce flux d'air à l'intérieur de ce rangement (R). Ce dispositif (D) comprend une pièce d'obturation (PO) comprenant au moins une patte de fixation (PF1, PF2) munie d'une encoche destinée à permettre sa fixation à rotation sur au moins un élément (EL1, EL2) de la paroi (PA), qui définit un axe de rotation pour l'entraînement en rotation de la pièce d'obturation (PO) entre au moins des première et seconde positions dans lesquelles respectivement elle obture totalement et elle n'obture pas, au moins partiellement, l'ouverture.

## Description

L'invention concerne la distribution de flux d'air dans des rangements de véhicules, éventuellement automobiles.

Certains véhicules (notamment automobiles) disposent d'au moins un rangement (ou compartiment) qui est délimité au moins partiellement par une paroi dans laquelle est définie au moins une ouverture destinée à permettre l'entrée d'un flux d'air de réfrigération ou de chauffage. Le contrôle de l'accès du flux d'air à l'intérieur du rangement est généralement assuré par un dispositif constitué de plusieurs pièces, comme par exemple un support, une molette rotative ou une tirette (ou réglette) montée sur le support, et au moins un volet (éventuellement à lames) dont la position par rapport à l'ouverture est contrôlée par la molette ou tirette.

Un tel dispositif est relativement onéreux, relativement long à installer ou à remplacer, et souvent relativement difficile à utiliser du fait de l'exiguïté du rangement dans lequel il est implanté.

L'invention a donc pour but d'améliorer la situation.

Elle propose à cet effet un dispositif, dédié au contrôle de l'accès d'un flux d'air à un rangement d'un véhicule, délimité au moins partiellement par une paroi comportant au moins une ouverture propre à permettre l'entrée de ce flux d'air à l'intérieur de ce rangement.

Ce dispositif se caractérise par le fait qu'il comprend une pièce d'obturation comprenant au moins une patte de fixation munie d'une encoche destinée à permettre sa fixation à rotation sur au moins un élément de la paroi qui définit un axe de rotation pour l'entraînement en rotation de cette pièce d'obturation entre au moins des première et seconde positions dans lesquelles respectivement elle obture totalement et elle n'obture pas, au moins partiellement, l'ouverture, de manière à interdire ou autoriser au moins partiellement l'entrée du flux d'air dans le rangement.

Le dispositif de contrôle d'accès selon l'invention peut comporter d'autres caractéristiques qui peuvent être prises séparément ou en combinaison, et notamment :
- sa pièce d'obturation peut comprendre deux pattes de fixation munies d'encoches destinées à permettre leur fixation à rotation respectivement sur deux éléments de la paroi qui définissent deux axes de rotation ;
- sa pièce d'obturation peut comprendre, dans une partie qui inclue une portion d'un bord périphérique, un bombement agencé de manière à faciliter son entraînement en rotation par un doigt d'un passager ;
- chaque patte de fixation peut comprendre au moins deux crans propres à immobiliser la pièce d'obturation respectivement dans ses première et seconde positions, par rapport à la paroi ;
- sa pièce d'obturation peut être définie dans un matériau plastique;
- il peut être destiné à contrôler l'accès d'un flux d'air de réfrigération ou d'un flux d'air de chauffage, par exemple.

L'invention propose également un rangement, pour un véhicule, comprenant un dispositif de contrôle d'accès du type de celui présenté ci-avant.

D'autres caractéristiques et avantages de l'invention apparaîtront à l'examen de la description détaillée ci-après, et des dessins annexés, sur lesquels :
- la figure 1 illustre schématiquement, dans une vue en perspective, une partie d'un rangement de véhicule équipé d'un exemple de dispositif de contrôle d'accès selon l'invention, placé dans une seconde position dite ouverte,
- la figure 2 est une vue en coupe transversale selon l'axe II-II de la figure 1,
- la figure 3 illustre schématiquement, dans une vue en perspective, le dispositif de contrôle d'accès de la figure 1 avant sa fixation sur la paroi du rangement,
- la figure 4 est une vue en coupe transversale selon l'axe IV-IV de la figure 1,
- la figure 5 illustre schématiquement, dans une vue en perspective, la partie du rangement de la figure 1 avec son dispositif de contrôle d'accès placé dans une première position dite fermée,
- la figure 6 est une vue en coupe transversale selon l'axe VI-VI de la figure 5, et
- la figure 7 est une vue en coupe transversale selon l'axe VII-VII de la figure 5.

Les dessins annexés pourront non seulement servir à compléter l'invention, mais aussi contribuer à sa définition, le cas échéant.

L'invention a pour but d'offrir un dispositif (D) destiné à contrôler l'accès d'un flux d'air dans un rangement (ou compartiment) (R) de véhicule.

Dans ce qui suit, on considère, à titre d'exemple non limitatif, que le véhicule est de type automobile, comme par exemple une voiture. Mais, l'invention n'est pas limitée à ce type de véhicule. Elle concerne en effet tout type de véhicule, notamment terrestre, comportant un rangement (ou compartiment) pouvant recevoir un flux d'air, éventuellement traité.

Par ailleurs, on considère dans ce qui suit, à titre d'exemple non limitatif, que le flux d'air est destiné à la réfrigération du rangement (R). Mais, l'invention n'est pas limitée à ce type de flux d'air. Elle concerne en effet tout flux d'air, traité ou non, recirculé ou non, et notamment les flux d'air de chauffage (par exemple destinés à une boîte à gants).

Enfin, on considère dans ce qui suit, à titre d'exemple non limitatif, que le rangement (R) est un vide poche faisant partie d'une planche de bord du véhicule. Mais, l'invention n'est pas limitée à ce type de rangement. Elle concerne en effet tout type de rangement (ou compartiment) avec ou sans volet ou porte d'accès, et pouvant être implanté en n'importe quel endroit d'un habitacle de véhicule, comme par exemple une planche de bord, une console ou une portière.

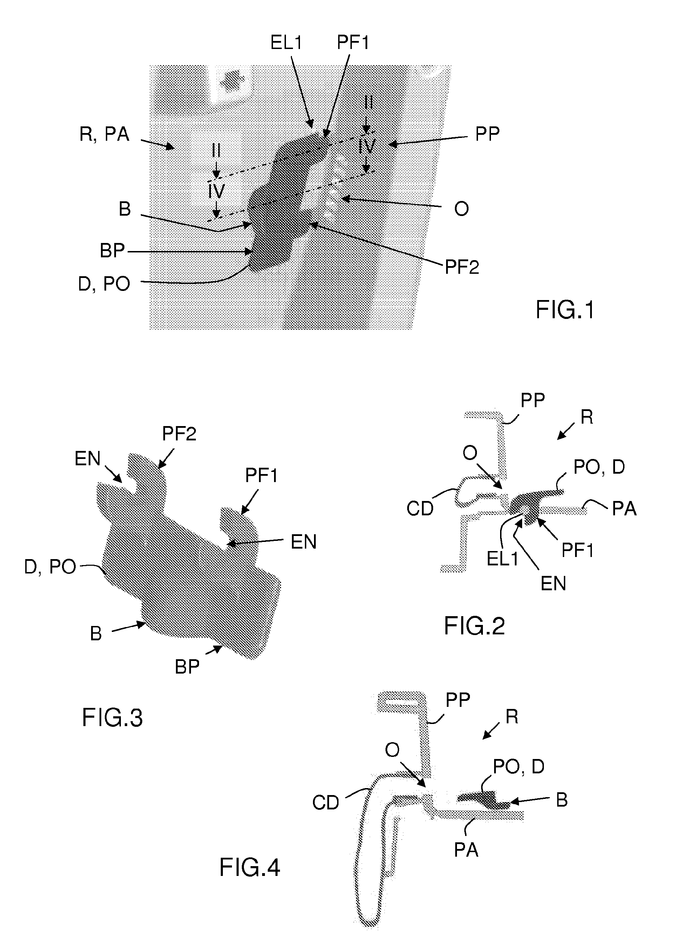

On a schématiquement représenté sur les figures 1 à 7 une partie d'un exemple de rangement R. Ce dernier (R) comprend une paroi PA comportant une partie PP munie d'au moins une ouverture O (voir figures 1, 2 et 4) raccordée à un conduit de distribution CD d'une installation de climatisation (non représentée), destiné à l'alimenter en flux d'air (ici de réfrigération). Le rangement R est équipé, au voisinage de son ouverture O, d'un dispositif de contrôle d'accès D selon l'invention.

On notera que dans l'exemple non limitatif illustré, l'ouverture O est subdivisée en six parties. Mais, elle pourrait ne comporter qu'une seule partie.

Un dispositif (de contrôle d'accès) D selon l'invention comprend essentiellement une pièce d'obturation PO, par exemple du type de celle illustrée sur la figure 3, destinée à être montée à rotation sur une paroi du rangement R.

Comme cela est mieux illustré sur les figures 2 et 3, cette pièce d'obturation PO comprend au moins une patte de fixation PFi munie d'une encoche EN destinée à permettre sa fixation à rotation sur au moins un élément ELi de la paroi PA.

Dans l'exemple non limitatif illustré, la pièce d'obturation PO comprend deux pattes de fixation PF1 et PF2 (i = 1 ou 2). Mais, elle pourrait ne comporter qu'une seule patte de fixation PFi, ou bien plus de deux (par exemple trois). Par conséquent, la paroi PA comprend dans l'exemple illustré deux éléments EL1 et EL2.

Les éléments ELi sont par exemple des plots qui présentent suivant une direction axiale une partie au moins partiellement cylindrique circulaire pour permettre l'entraînement en rotation de la pièce d'obturation PO.

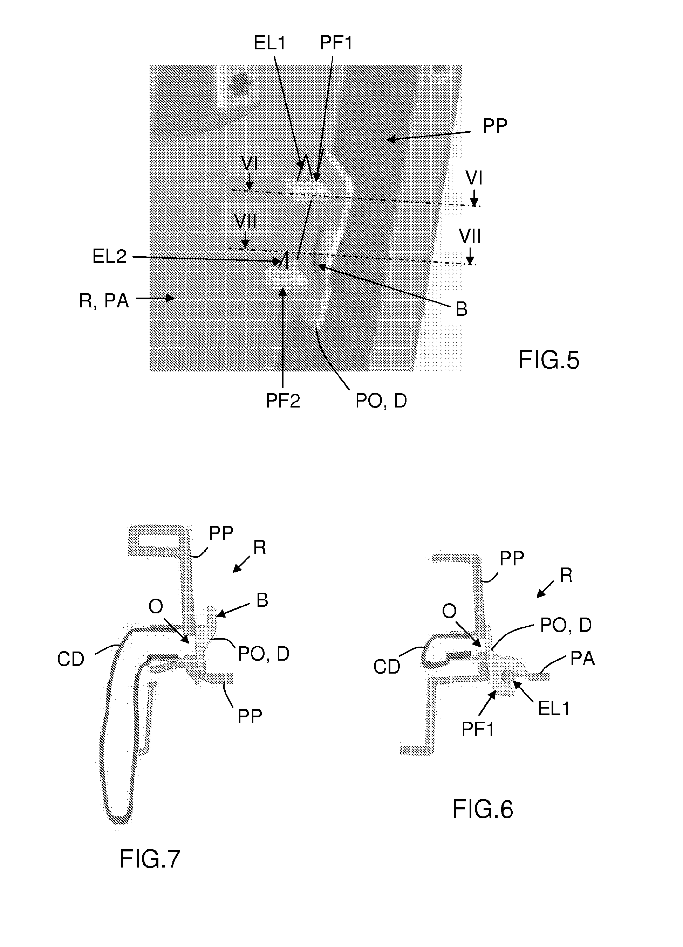

Comme cela est mieux illustré sur les figures 2, 5 et 6, les éléments ELi définissent des axes de rotation autour desquels la pièce d'obturation PO peut être entraînée en rotation, via ses pattes de fixation PFi, entre au moins des première et seconde positions. Dans la première position, dite fermée (illustrée sur les figures 5 à 7), la pièce d'obturation PO est plaquée contre la partie PP de la paroi PA afin d'obturer totalement l'ouverture O et ainsi interdire l'entrée du flux d'air à l'intérieur du rangement R. Dans la seconde position, dite ouverte (illustrée sur les figures 1, 2 et 4), la pièce d'obturation PO est écartée de la partie PP de la paroi PA afin de libérer intégralement l'ouverture O et ainsi laisser librement le flux d'air pénétrer à l'intérieur du rangement R.

On notera que l'on pourrait tout à fait prévoir entre les première et seconde positions au moins une position intermédiaire dans laquelle la pièce d'obturation PO n'obture que partiellement l'ouverture O de manière à n'autoriser que partiellement l'entrée du flux d'air à l'intérieur du rangement R.

La solidarisation de la pièce d'obturation PO à la paroi PA du rangement R se fait en introduisant en force (ou clippant) les éléments ELi dans les encoches EN des pattes de fixation PFi correspondantes. Ces encoches EN présentent de préférence une forme semi-circulaire de diamètre interne sensiblement égal au diamètre externe des éléments ELi.

Les éléments ELi sont par exemple définis par moulage au moins dans l'épaisseur de la paroi PA. Dans ce cas, ils doivent être entourés axialement de renfoncements ou d'ouvertures destiné(e)s à permettre le passage des extrémités des pattes de fixation PFi lors de leurs entraînements en rotation. Mais, ils pourraient être également définis légèrement au dessus du niveau de la paroi PA. D'une manière générale, la rotation se fait à un endroit qui dépend de la cinématique de la pièce d'obturation PO.

Afin de faciliter l'entraînement en rotation de la pièce d'obturation PO par un doigt d'un passager (ou d'un technicien), la pièce d'obturation PO peut, comme illustré non limitativement, comporter un bombement (ou renflement ou encore déformation) B dans une partie qui inclue une portion de son bord périphérique BP. Dans l'exemple non limitatif illustré, le bombement B est défini dans une partie de la pièce d'obturation PO qui est située entre les deux pattes de fixation PFi et qui inclue le côté du bord périphérique BP qui est opposé à celui où sont partiellement définies les pattes de fixation PFi.

Chaque patte de fixation PFi peut comprendre en au moins deux endroits distants, sur une face externe, au moins deux crans (ou dents) périphériques saillant(e)s (non représenté(e)s) propres à immobiliser la pièce d'obturation PO par rapport à la paroi PA respectivement dans ses première et seconde positions (ainsi que dans ses éventuelles positions intermédiaires). On comprendra que chaque cran saillant constitue localement une surépaisseur qui vient frotter contre la paroi PA empêchant ainsi la pièce d'obturation PO de tourner librement par exemple en présence de vibrations ou de chocs.

On notera que la pièce d'obturation PO peut par exemple être définie par moulage dans un matériau plastique, en particulier lorsque la paroi PA du rangement R est également réalisée dans un matériau plastique (par exemple pour une question de coût et/ou de mise en oeuvre). Mais, elle peut être réalisée en tout autre matériau, de préférence de faible poids.

L'invention ne se limite pas aux modes de réalisation de dispositif de contrôle d'accès et de rangement décrits ci-avant, seulement à titre d'exemple, mais elle englobe toutes les variantes que pourra envisager l'homme de l'art dans le cadre des revendications ci-après.

## Revendications

1. Dispositif (D) de contrôle d'accès d'un flux d'air à un rangement (R) d'un véhicule automobile, délimité au moins partiellement par une paroi (PA) comportant au moins une ouverture (O) propre à permettre l'entrée dudit flux d'air à l'intérieur dudit rangement (R), **caractérisé en ce qu'**il comprend une pièce d'obturation (PO) comprenant au moins une patte de fixation (PFi) munie d'une encoche (EN) destinée à permettre sa fixation à rotation sur au moins un élément (ELi) de ladite paroi (PA), qui définit un axe de rotation pour l'entraînement en rotation de ladite pièce d'obturation (PO) entre au moins des première et seconde positions dans lesquelles respectivement elle obture totalement et elle n'obture pas, au moins partiellement, ladite ouverture (O).

2. Dispositif selon la revendication 1, **caractérisé en ce que** ladite pièce d'obturation (PO) comprend deux pattes de fixation (PFi) munies d'encoches (EN) destinées à permettre leur fixation à rotation respectivement sur deux éléments (ELi) de ladite paroi (PA), qui définissent deux axes de rotation.

3. Dispositif selon l'une des revendications 1 et 2, **caractérisé en ce que** ladite pièce d'obturation (PO) comprend, dans une partie qui inclue une portion d'un bord périphérique (BP), un bombement (B) agencé de manière à faciliter son entraînement en rotation par un doigt d'un passager.

4. Dispositif selon l'une des revendications 1 à 3, **caractérisé en ce que** chaque patte de fixation (PFi) comprend au moins deux crans périphériques propres à immobiliser ladite pièce d'obturation (PO) respectivement dans ses première et seconde positions, par rapport à ladite paroi (PA).

5. Dispositif selon l'une des revendications 1 à 4, **caractérisé en ce que** ladite pièce d'obturation (PO) est définie dans un matériau plastique.

6. Dispositif selon l'une des revendications 1 à 5, **caractérisé en ce qu'**il est destiné à contrôler l'accès d'un flux d'air choisi parmi un flux d'air de réfrigération et un flux d'air de chauffage.

7. Rangement (R) pour un véhicule, **caractérisé en ce qu'**il comprend un dispositif de contrôle d'accès (D) selon l'une des revendications précédentes.
